# EUROPEAN PATENT APPLICATION

(11) **EP 4 793 770 A1**
(43) Date of publication of application: **19.08.2026**
(21) Application number: 24887820.9
(22) Date of filing: 29.10.2024
(51) Int. Cl.: G06F 9/48

(54) **COMMUNICATION METHOD AND APPARATUS**

(30) Priority: 06.11.2023 CN 202311470124
(71) Applicant: HUAWEI TECHNOLOGIES CO., LTD., Shenzhen 518129 (CN)
(72) Inventor: XU, Anmin, Shenzhen, Guangdong 518129 (CN); LI, Yinghui, Shenzhen, Guangdong 518129 (CN); YANG, Fei, Shenzhen, Guangdong 518129 (CN); HUI, Shaobo, Shenzhen, Guangdong 518129 (CN); WANG, Wanhong, Shenzhen, Guangdong 518129 (CN); CHEN, Zhe, Shenzhen, Guangdong 518129 (CN); LI, Guangpeng, Shenzhen, Guangdong 518129 (CN)
(74) Representative: Isarpatent
(86) International application number: PCT/CN2024/128267
(87) International publication number: WO 2025/098208

(57) **Abstract**

A communication method and apparatus are provided for use in a first IoT device. The method includes: The first IoT device generates a first task request and a second task request (S201), where the first task request indicates to process data of a first service, the second task request indicates to process data of a second service, each of the first service and the second service is a service that requires long-term communication and whose service volume is less than a first threshold, and the first service is different from the second service; and the first IoT device schedules the first task request and the second task request to a first thread for processing (S202). In this way, thread scheduling of the task request can be implemented, resource utilization can be improved, and a plurality of services can be supported.

## Description

### CROSS-REFERENCE TO RELATED APPLICATIONS

This application claims priority to Chinese Patent Application No. 202311470124.1, filed with the China National Intellectual Property Administration on November 6, 2023 and entitled "COMMUNICATION METHOD AND APPARATUS", which is incorporated herein by reference in its entirety.

### TECHNICAL FIELD

This application relates to the internet of things field, and in particular, to a communication method and apparatus.

### BACKGROUND

In IoT networking, a plurality of IoT devices (including a control device and a controlled device) communicate with each other by using a wireless network communication technology (Wi-Fi) or a wired connection. When the plurality of IoT devices communicate with each other, each service usually needs to occupy one thread for management and storage of a task request related to the service. However, because both central processing unit (central processing unit, CPU) resources and memory resources of the IoT device are extremely limited, it is difficult to start a plurality of threads simultaneously, a plurality of services cannot be simultaneously supported, and a requirement for communication between the plurality of IoT devices cannot be maintained.

### SUMMARY

Embodiments of this application provide a communication method and apparatus, to implement thread scheduling of a task request, improve resource utilization, and support a plurality of services.

According to a first aspect, this application provides a communication method. The method is applied to a first IoT device, and the method includes: The first IoT device generates a first task request and a second task request, where the first task request indicates to process data of a first service, the second task request indicates to process data of a second service, each of the first service and the second service is a service that requires long-term communication and whose service volume is less than a first threshold, and the first service is different from the second service; and the first IoT device schedules the first task request and the second task request to a first thread for processing.

According to the method, task requests corresponding to different services may share a same thread, thereby increasing a quantity of simultaneously concurrent task requests, saving compute resources and storage resources of the IoT device, improving resource utilization, and serving a plurality of services.

In a possible design, a process of scheduling the first task request and the second task request to the first thread for processing includes: The first IoT device obtains a first correspondence between the first service and the first thread and a second correspondence between the second service and the first thread; and the first IoT device schedules, based on the first correspondence and the second correspondence, the first task request and the second task request to the first thread for processing.

In this design, the first IoT device may schedule, based on the stored correspondences, a task request to a corresponding thread process for processing, thereby improving communication accuracy.

In a possible design, the method further includes: When the first task request is a 1^{st} task request of the first service, the first IoT device stores the first correspondence; and when the second task request is a 1^{st} task request of the second service, the first IoT device stores the second correspondence.

In this design, the first IoT device may store the correspondences between the service and the thread, so that a task request can be scheduled to a corresponding thread process for processing, and the communication accuracy can be improved.

In a possible design, before scheduling the first task request and the second task request to the first thread for processing, the method further includes: The first IoT device determines a first quantity of to-be-scheduled task requests, where the to-be-scheduled task requests include the first task request and the second task request; and the first IoT device determines that the first quantity is less than or equal to a concurrency quantity, where the concurrency quantity is determined based on a second quantity of task requests currently being processed and a concurrency threshold.

In this design, the first IoT device can control the quantity of task requests that are processed simultaneously in the first thread to not exceed the concurrency threshold, so that congestion inside the first thread can be avoided.

In a possible design, the method further includes: The first IoT device receives a first packet from a second IoT device, where the first packet indicates to establish a first connection between the first IoT device and the second IoT device, and the first connection indicates a scheduling manner of a task request corresponding to a service that requires long-term communication and whose service volume is less than the first threshold; the first IoT device sends a second packet to the second IoT device based on the first packet, where the second packet indicates that establishment of the first connection is agreed; and the first IoT device receives a third packet from the second IoT device, where the third packet indicates that the establishment of the first connection is completed.

In this design, a specific connection relationship (for example, a concurrent connection) is established between an IoT device (for example, the first IoT device) initiating a task request and a target device (for example, the second IoT device) of the task request, to determine the scheduling manner of the service that requires the long-term communication and whose service volume is less than the first threshold in the connection relationship, thereby reducing resource overheads.

In a possible design, the first packet includes a first field, the second packet includes the first field, and the third packet includes the first field, where the first field is a first value or a second value, the first value is an identifier of the first connection, the second value is an identifier of a second connection, and the second connection indicates a scheduling manner of a task request corresponding to a service that is for temporary communication or whose service volume is greater than the first threshold.

In this design, a connection manner can be distinguished by using the first field in the packet. That is, a service type can be distinguished. In this way, the scheduling manner corresponding to the service is determined, thereby reducing the resource overheads.

In a possible design, the first thread is used to manage a to-be-processed task request, and the method further includes: The first IoT device schedules the first task request and the second task request to a second thread for processing, where the second thread is used to store data corresponding to the to-be-processed task request.

In this design, the first IoT device may assist the first thread in implementing some functions by using the second thread, thereby improving a matching degree of thread work and improving the resource utilization.

According to a second aspect, this application further provides a communication apparatus. The communication apparatus may perform the foregoing method design. The communication apparatus may be a chip or a circuit that can perform the function corresponding to the foregoing method, or a device including the chip or the circuit.

In a possible design, the communication apparatus includes a communication unit, configured to receive and send data; and the communication apparatus further includes a processing unit, configured to implement the steps in the foregoing method. The foregoing function may be implemented by hardware, or may be implemented by hardware executing corresponding software. The hardware or the software includes one or more units that correspond to the foregoing function.

According to a third aspect, this application further provides a communication device. The communication device may perform the foregoing method design. The communication device includes: a storage, configured to store computer-executable program code; and a processor, where the processor is coupled to the storage. The program code stored in the storage includes instructions. When the processor executes the instructions, the communication device or a device in which the communication device is mounted is caused to perform the method in any one of the foregoing possible designs.

The communication device may further include a communication interface. Alternatively, if the communication device is a chip or a circuit, the communication interface may be an input/output interface of the chip, for example, an input/output pin.

According to a fourth aspect, this application provides a communication system. The communication system includes one or more apparatuses of the terminal device performing the first aspect and/or the network device performing the second aspect.

According to a fifth aspect, this application provides a computer-readable storage medium. The computer-readable storage medium stores a computer program. When the computer program is run on an apparatus, the method in any one of the foregoing possible designs is performed.

According to a sixth aspect, this application provides a computer program product. A computer-readable storage medium stores computer-executable instructions. When the computer-executable instructions are invoked by a computer, the method in any one of the foregoing possible designs is performed.

According to a seventh aspect, this application provides a chip. The chip includes a processor and a storage. The processor is coupled to the storage, and is configured to read a computer program stored in the storage, to perform the method in any one of the foregoing possible designs.

In addition, for technical effects brought by the second aspect to the seventh aspect, refer to the descriptions in the first aspect. Details are not repeated here.

### BRIEF DESCRIPTION OF DRAWINGS

FIG. 1 is a diagram of an architecture of a communication system according to an embodiment of this application;
FIG. 2 is a schematic flowchart of a communication method according to an embodiment of this application;
FIG. 3a is a thread scheduling diagram according to an embodiment of this application;
FIG. 3b is another thread scheduling diagram according to an embodiment of this application;
FIG. 4a is an example diagram of communication according to an embodiment of this application;
FIG. 4b is an example diagram of another communication according to an embodiment of this application;
FIG. 4c is an example diagram of another communication according to an embodiment of this application;
FIG. 5 is a schematic flowchart of another communication method according to an embodiment of this application;
FIG. 6a is an example diagram of a packet according to an embodiment of this application;
FIG. 6b is an example diagram of another packet according to an embodiment of this application;
FIG. 7a is an example diagram of a handshake according to an embodiment of this application;
FIG. 7b is an example diagram of another handshake according to an embodiment of this application;
FIG. 8 is a diagram of a structure of a communication apparatus according to an embodiment of this application; and
FIG. 9 is a diagram of a structure of another communication device according to an embodiment of this application.

### DESCRIPTION OF EMBODIMENTS

To make the objectives, technical solutions, and beneficial effects of this application clearer and more comprehensible, the following further describes this application in detail with reference to the accompanying drawings and embodiments. It should be understood that specific embodiments described herein are merely used to explain this application but are not intended to limit this application.

In descriptions of this application, "/" means "or" unless otherwise specified. For example, A/B may indicate A or B. In this application, "and/or" describes only an association relationship for describing associated objects and indicates that three relationships may exist. For example, A and/or B may indicate the following three cases: Only A exists, both A and B exist, and only B exists. In addition, in the descriptions of this application, "at least one item" means one or more items, and "a plurality of items" means two or more items. In the descriptions of this application, words such as "first" and "second" are merely used for differentiated description, and cannot be understood as an indication or implication of relative importance, or cannot be understood as an indication or implication of an order.

The communication method provided in embodiments of this application may be applied to an architecture of internet of things communication. The communication structure usually includes a plurality of IoT devices, and the plurality of IoT devices include at least one control device and at least one controlled device. This is not specifically limited. The IoT device is usually an IoT device with low CPU performance (for example, a low-end IoT device or a high-end IoT device), and has limited memory resources and compute resources. The low-end IoT device has a 2-core 1.2 GHz ARM CPU, and has a memory size of 128 MB. The high-end IoT device has a 4-core 1 GHz ARM CPU, and a memory size of 2 GB.

Optionally, the IoT device may be a terminal device. The following describes possible implementation forms and functions of the terminal device by using examples. The terminal device is also referred to as user equipment (user equipment, UE), a mobile station (mobile station, MS), a mobile terminal (mobile terminal, MT), or the like, and is a device that provides voice and/or data connectivity for a user. For example, the terminal device 102 includes a handheld device, a vehicle-mounted device, or the like having a wireless connection function. Currently, the terminal device 102 may be: a mobile phone (mobile phone), a tablet, a notebook computer, a palmtop computer, a mobile internet device (mobile internet device, MID), a wearable device (such as a smartwatch, a smart band, or a pedometer), a vehicle-mounted device (such as a car, a bicycle, an electric car, an airplane, a ship, a train, or a high-speed rail), a virtual reality (virtual reality, VR) device, an augmented reality (augmented reality, AR) device, a wireless terminal in industrial control (industrial control), a smart home device (such as a refrigerator, a television, an air conditioner, or a meter), an intelligent robot, a workshop device, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (such as an intelligent robot, a hot air balloon, an uncrewed aerial vehicle, or an airplane), or the like.

The method provided in embodiments of this application may be performed by an IoT device, or may be performed by a component (for example, a processor, a chip, or a chip system) in the IoT device.

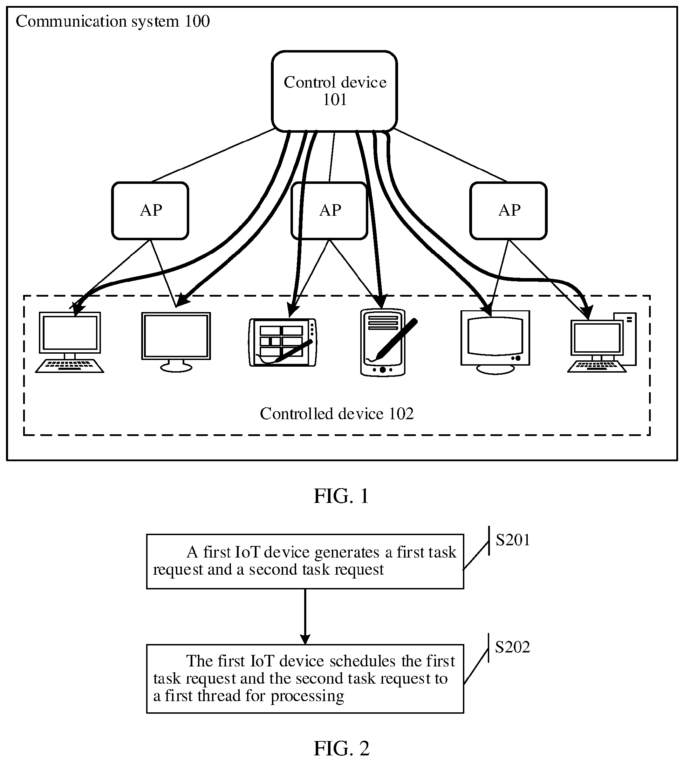

FIG. 1 shows an architecture of a communication system to which an embodiment of this application is applicable. Refer to FIG. 1. The communication system 100 includes a control device 101 and at least one controlled device 102. The control device 101 and the controlled device 102 implement communication by using Wi-Fi (which is shown as thick arrows in the figure as an example) or a wired connection (not shown in the figure). As shown in FIG. 1, when the communication is implemented by using the Wi-Fi, one or more access points (APs) may be deployed between the control device 101 and the controlled device 102.

For example, the communication system 100 may be applied to a smart home scenario. The control device 101 may be a control central device (for example, an IoT device like a mobile phone or a watch), and the control device 101 is connected to Wi-Fi in the smart home scenario. The controlled device 102 may be any smart appliance (for example, an IoT device like a computer, a lamp, a rice cooker, a refrigerator, a washing machine, or a socket), and the controlled device 102 is connected to the Wi-Fi in the smart home scenario.

To implement thread scheduling of a task request, improve resource utilization, and support a plurality of services, embodiments of this application provide a communication method. The communication method may be implemented in the communication system shown in FIG. 1. The following describes the communication method provided in embodiments of this application with reference to the accompanying drawings.

FIG. 2 shows a communication method according to an embodiment of this application. The method may include the following steps.

S201: A first IoT device generates a first task request and a second task request, where the first task request indicates to process data of a first service, the second task request indicates to process data of a second service, each of the first service and the second service is a service that requires long-term communication and whose service volume is less than a first threshold, and the first service is different from the second service. When the communication method in this application is applied to the communication system shown in FIG. 1, the first IoT device in this embodiment of this application may be the control device 101 or the controlled device 102.

S202: The first IoT device schedules the first task request and the second task request to a first thread for processing.

Optionally, the first thread is used to perform management (including memory management, congestion management, and reliability management) of a to-be-processed task request. The first IoT device may further schedule the first task request and the second task request to a second thread for processing, where the second thread is used to store data corresponding to the to-be-processed task request. In this way, the second thread may match a shared buffer, and resources can be allocated based on operating modes of different threads in a process of processing the task request, thereby reducing memory resource consumption.

Optionally, the first IoT device may generate different task requests for a same service. This is not limited in this application. For example, assuming that the first task request indicates to process first data of the first service, the first IoT device may further generate a third task request, where the third task request indicates to process second data of the first service. Correspondingly, a same processing manner may be used for different task requests generated for the same service. For example, assuming that the first task request is sequentially scheduled to a first thread process and a second thread process for processing, the first IoT device may sequentially schedule the third task request to the first thread and the second thread for processing.

In a conventional communication manner, an IoT device separately manages and stores task requests corresponding to different services, and schedules the task requests to different threads for processing.

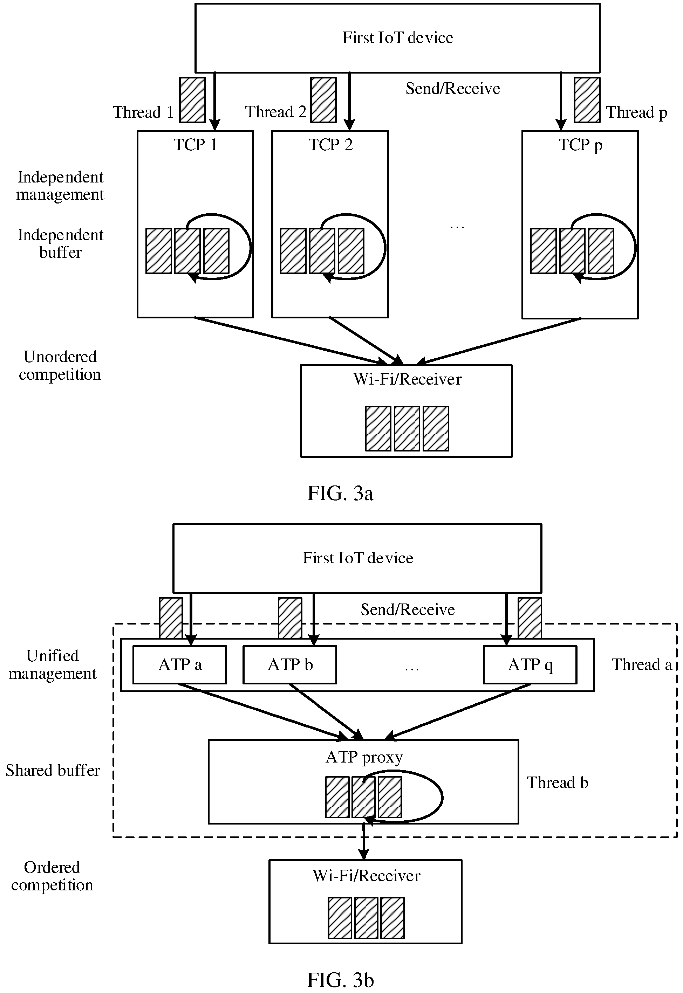

For example, FIG. 3a is a thread scheduling diagram according to an embodiment of this application. It is assumed that processing in a thread scheduling process is performed based on a transmission control protocol (transmission control protocol, TCP).

An IoT device establishes, for a service 1, a connection whose identifier is a TCP 1, and schedules a task request related to the service 1 to a thread 1 for processing; the IoT device establishes, for a service 2, a connection whose identifier is a TCP 2, and schedules a task request related to the service 2 to a thread 2 for processing; the IoT device establishes, for a service p, a connection whose identifier is a TCP p, and schedules a task request related to the service p to a thread p for processing; and in a process in which each of the threads sends a corresponding packet to a Wi-Fi network (or a receiver), there is an unordered competition between the threads. Based on such a communication method, the IoT device needs to start a thread for each service, to process a task request of the service. Each thread performs independent management and independent storage. Therefore, communication overheads are extremely high, and a large quantity of compute resources and a large quantity of storage resources are occupied. Because the IoT device usually has a poor CPU capability and small memory space, simultaneously starting hundreds or thousands of threads cannot be supported, and processing requirements of a large quantity of services cannot be satisfied.

However, based on the communication method shown in step S201 and step S202, for different services (for example, the first service and the second service) that require long-term communication and whose service volumes are less than the first threshold, the first IoT device starts only the first thread (and the second thread), to process task request processes corresponding to different services. The second thread may be identified by using an adaptive transmission protocol (adaptive transmission protocol, ATP) proxy. An ATP is a data transmission protocol formed in embodiments of this application. Details of the protocol are described below and are not repeated here.

For example, FIG. 3b is another thread scheduling diagram according to an embodiment of this application. A first IoT device establishes, for a service a, a connection whose identifier is an ATP a, establishes, for a service b, a connection whose identifier is an ATP b, and establishes, for a service q, a connection whose identifier is an ATP q. Correspondingly, the foregoing q connections share resources of a thread a (and a thread b), and the first IoT device schedules all task requests related to the service a, the service b, and the service q to the thread a (and the thread b) for processing. In a process in which the thread a (and the thread b) sends a corresponding packet to a Wi-Fi network (or a receiver), there is an ordered competition in data transmission in the threads. In this way, task requests corresponding to different services may share the thread a (and the thread b), thereby reducing communication overheads corresponding to each connection.

According to the communication method shown in step S201 and step S202, the task requests corresponding to different services may share the same thread, thereby increasing a quantity of simultaneously concurrent task requests, saving compute resources and storage resources of the IoT device, improving resource utilization, and supporting a plurality of services.

In a possible design of step S202, a process in which the first IoT device schedules the first task request and the second task request to the first thread for processing includes: The first IoT device obtains a first correspondence between the first service and the first thread and a second correspondence between the second service and the first thread; and the first IoT device schedules, based on the first correspondence and the second correspondence, the first task request and the second task request to the first thread for processing. In this way, the first IoT device may schedule, based on the stored correspondences, a task request to a corresponding thread process for processing, thereby improving communication accuracy.

Optionally, when the first task request is a 1^{st} task request of the first service, the first correspondence is stored; and when the second task request is a 1^{st} task request of the second service, the second correspondence is stored. For example, the first IoT device may add a socket corresponding to the first service to the first thread, and the first IoT device may further add a socket corresponding to the second service to the first thread. In this way, for a 1^{st} task request of any service, the first IoT device may store correspondences between a plurality of services (the first service and the second service) and the first thread, so that the first IoT device may schedule, based on the correspondences, a task request subsequently generated for the service.

It should be understood that, if the first IoT device further needs to start another thread (for example, the second thread) to process a task request corresponding to a service that requires long-term communication and whose service volume is less than the first threshold, the first IoT device may further store correspondences between the foregoing plurality of services (the first service and the second service) and the another thread (for example, the second thread) based on the method in the foregoing design. For example, the first IoT device may further add the socket corresponding to the first service and the socket corresponding to the second service to the another thread (for example, the second thread).

In an internet of things (internet of things, IoT) communication architecture, complete processing of the task request includes: The IoT device sends a request packet (which is usually less than 1 KB) corresponding to the task request, and the IoT device receives a response packet (for example, an ACK packet) corresponding to the task request. In other words, as long as the IoT device receives no response packet corresponding to the task request, the IoT device determines that the task request is still being processed. Because a data amount of the request packet is small and only one packet is usually required, if the request packet is lost, the corresponding response packet is not received. Based on a point-to-multipoint primary station (point 2 multiple point, P2MP) retransmission timeout mechanism (retransmission timeout, RTO), when the IoT device receives no response packet within a period of time after sending the request packet, the IoT device needs to resend the request packet until the IoT device receives the response packet or receives indication information for interrupting the task request.

In a conventional communication manner, the IoT device needs to start a thread for each service. When the IoT device receives no response packet, the IoT device initiates retransmission on a corresponding thread, that is, resends a request packet corresponding to a task request. Under a weak Wi-Fi network condition, a large quantity of retransmission operations cause a retransmission storm in the thread. Taking an example in which the IoT device is a sender (or referred to as a server), this application provides the following example (Example A) based on the conventional manner of processing the task request.

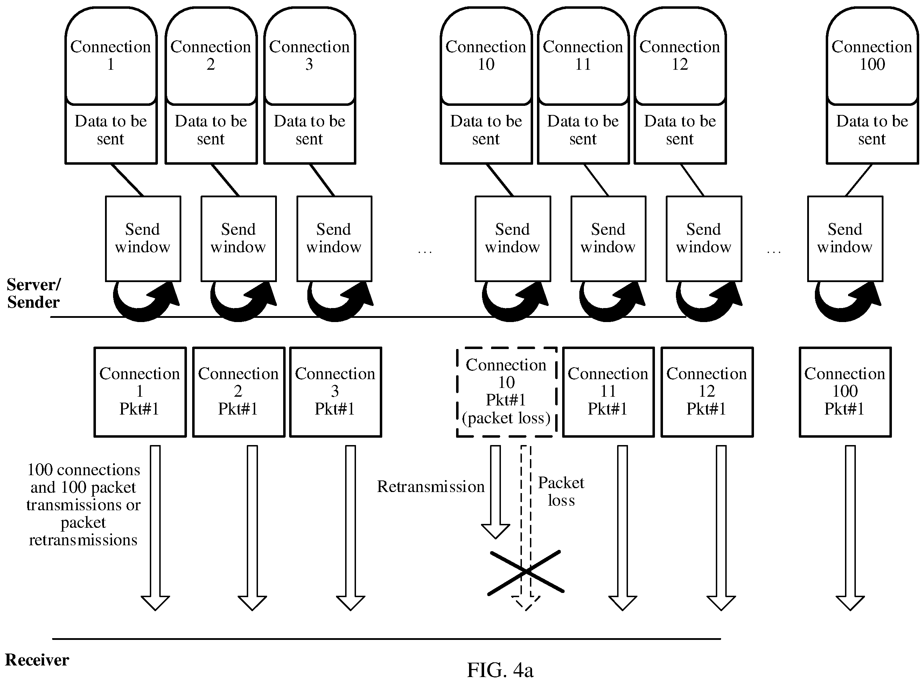

Example A: As shown in FIG. 4a, the sender may include a plurality of send windows, the sender establishes connections corresponding to 100 services in total, and the sender generates task requests (that is, data to be sent) based on different connections. With reference to the communication manner shown in FIG. 3a, it can be learned that in the conventional communication manner, the task requests corresponding to different services are respectively scheduled to different threads for processing, each thread corresponds to one send window, and different threads independently perform processing (for example, send a request packet whose identifier is Pkt#1) and perform congestion control, and different threads (send windows) do not interact with each other. A size of the send window is related to an amount of data currently processed, and the size of the send window determines a packet sending rate in the send window. When the IoT device receives a response packet in a send window, the size of the send window increases. If packet loss occurs (a request packet is lost), the IoT device cannot receive the response packet, and retransmission needs to be performed. In this case, the size of the send window decreases. Therefore, under a weak Wi-Fi network condition, a retransmission storm may occur on the IoT device in a thread, and another thread may be in an idle state, causing a waste of resources.

According to the communication method shown in step S201 and step S202, when a same thread processes task requests corresponding to a plurality of services, a quantity of task requests may exceed a concurrency threshold that can be supported by the thread. Therefore, under a weak Wi-Fi network condition, if the IoT device simultaneously sends a large quantity of request packets in a thread, a large quantity of retransmission packets may be triggered based on RTO, causing a retransmission storm. As a result, congestion occurs and the network becomes worse. In view of this, this application provides the following designs to avoid the congestion.

Before step S202 is performed, the first IoT device may further determine a first quantity of to-be-scheduled task requests, where the to-be-scheduled task requests include the first task request and the second task request; and the first IoT device determines that the first quantity is less than or equal to a concurrency quantity, where the concurrency quantity is determined based on a second quantity of task requests currently being processed and a concurrency threshold.

Optionally, the concurrency quantity=the concurrency threshold-the second quantity.

Optionally, the task request currently being processed includes a task request for which the first IoT device has sent a request packet and the first IoT device has not received a response packet. Correspondingly, assuming that the first IoT device receives a response packet of a task request, the first IoT device determines that processing of the task request is completed, and releases a corresponding concurrent resource (that is, decreases a second quantity and increases a concurrency quantity).

Based on the foregoing design, the first IoT device may include a concurrency management module (also referred to as a unified window). The first IoT device controls, by using the concurrency management module based on the concurrency threshold, a quantity of task requests that are processed simultaneously, and also controls, by using the concurrency management module, RTO of each task request. In this way, the first IoT device can ensure that the quantity of task requests (including a quantity of retransmissions initiated for the request packet) that are processed simultaneously does not exceed the concurrency threshold, so that a retransmission storm can be avoided, and a transmission delay can be reduced. Still using an example in which the first IoT device is the server (or referred to as the sender), and in which the first IoT device processes a plurality of task requests by using the concurrency management module, this application provides the following examples (Example B and Example C).

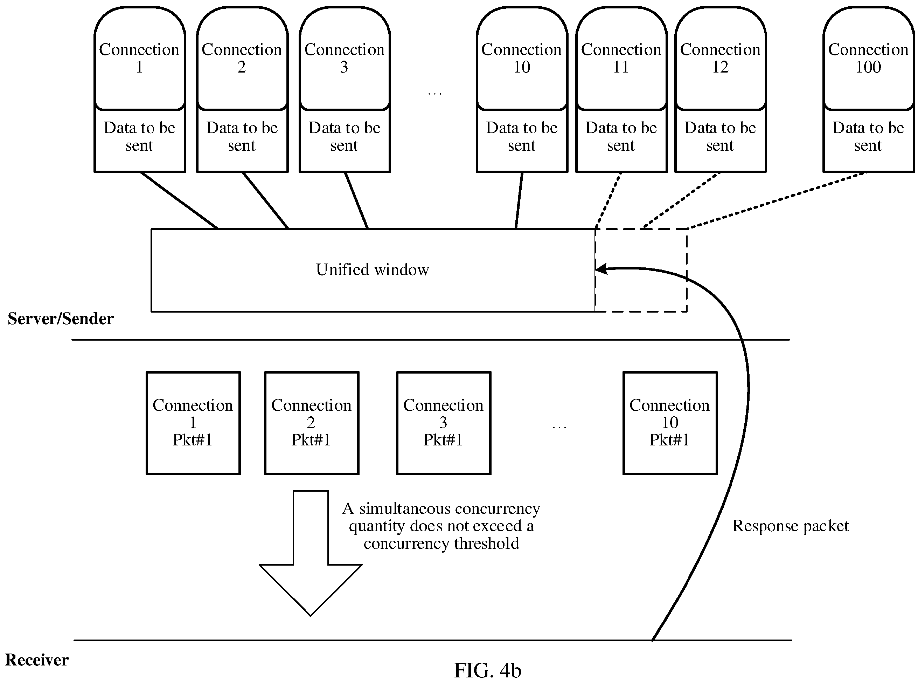

Example B: As shown in FIG. 4b, it is assumed that a sender establishes connections corresponding to 100 services in total, the sender generates 100 task requests (that is, data to be sent) based on different connections, a concurrency threshold of a first thread is n (for example, n=10), and a second quantity of task requests (for example, task requests corresponding to a connection 1 and a connection 2) that are being processed in the first thread is m (for example, m=2). In this case, a concurrency quantity i=n-m (for example, i=8). Correspondingly, the first IoT device schedules, by using the concurrency management module, any eight task requests (for example, task requests corresponding to a connection 3 to a connection 10) in the foregoing 100 task requests to the first thread for processing (sending a request packet and receiving a response packet), and the remaining 90 task requests need to wait for next scheduling of the concurrency management module. Based on the processing manner of Example B, the quantity of task requests that are processed simultaneously in the first thread does not exceed the concurrency threshold, so that the congestion can be avoided.

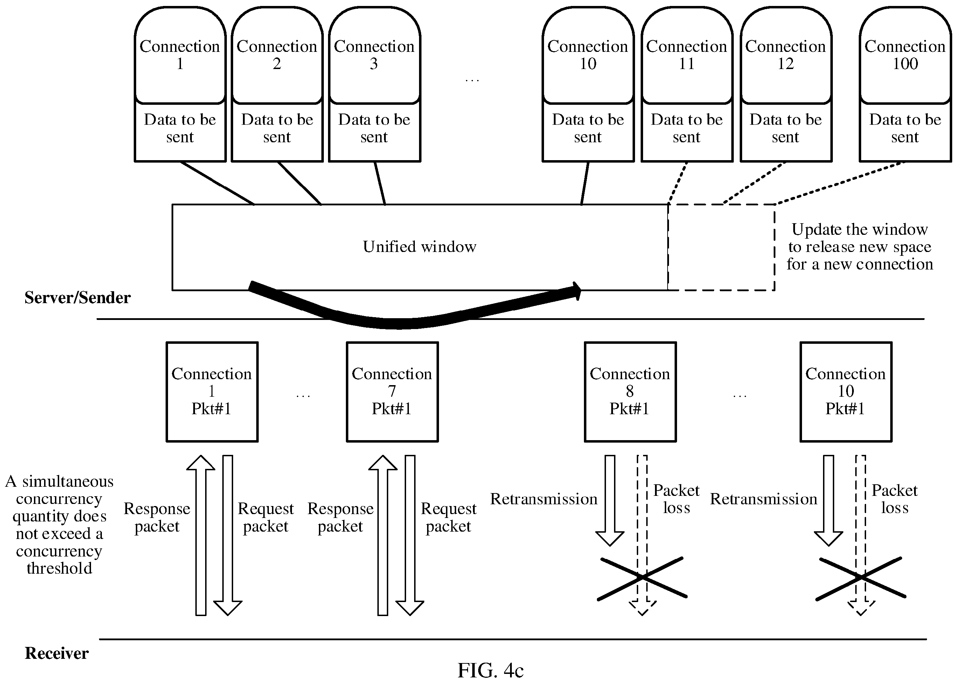

Example C: As shown in FIG. 4c, based on the processing manner shown in FIG. 4b, assuming that after a period of time (a preset time period), the sender receives response packets corresponding to seven task requests, the concurrency management module releases seven processing resources. In this case, the second quantity of task requests being processed (for retransmission caused by connection timeout) is m' (m'=3), and the concurrency quantity i'=n-m' (i'=7). In other words, the first IoT device may schedule, by using the concurrency management module, any seven task requests in the foregoing 90 task requests to the first thread for processing, and the remaining 83 task requests wait for next scheduling of the concurrency management module. A subsequent processing manner is the same, and details are not repeated here. In the processing manner based on Example C, the task request that waits to be scheduled does not need to be retransmitted based on RTO, so that it can be ensured that the quantity of task requests (including retransmission) processed simultaneously in the first thread does not exceed the concurrency threshold, and the congestion can be avoided.

In this design, the first IoT device can control the quantity of task requests that are processed simultaneously in the first thread to not exceed the concurrency threshold, so that the congestion in the first thread can be avoided.

Before the task request is processed, it needs to be ensured that a connection has been established between the IoT device that initiates the task request and a target device of the task request. One IoT device can maintain hundreds or even thousands of connections with a plurality of IoT devices. In this application, connections between the IoT devices are classified into the following two types:
(1) Concurrent connection: is a connection established between two IoT devices for long-term communication. In this connection manner, a small amount of data is transmitted between the IoT devices.
(2) Data connection: is a connection established between two IoT devices for temporary communication. In this connection manner, a large amount of data is transmitted between the IoT devices. The IoT device usually establishes the data connection when data transmission is required, and disconnects the data connection after the data transmission is completed.

It should be understood that the first service and the second service each are a service that requires long-term communication and whose service volume is less than the first threshold. Therefore, the communication method shown in step S201 and step S202 is implemented on the basis of the concurrent connection that has been established.

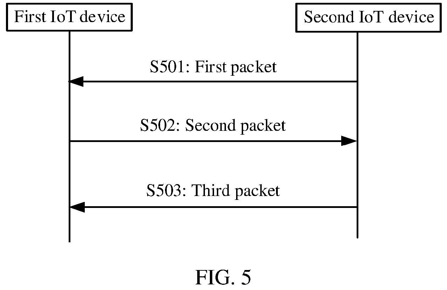

In a possible design, the first IoT device may interact with a second IoT device, to establish the concurrent connection or the data connection. When the communication method in this application is applied to the communication system shown in FIG. 1, the second IoT device in this embodiment of this application may be the control device 101 or the controlled device 102. FIG. 5 shows a connection establishment method according to an embodiment of this application. The method includes the following steps.

S501: A second IoT device sends a first packet to a first IoT device, and correspondingly, the first IoT device receives the first packet from the second IoT device. The first packet indicates to establish a first connection between the first IoT device and the second IoT device, and the first connection indicates a scheduling manner of a task request corresponding to a service that requires long-term communication and whose service volume is less than a first threshold.

S502: The first IoT device sends a second packet to the second IoT device based on the first packet, and correspondingly, the second IoT device receives the second packet from the first IoT device. The second packet indicates that establishment of the first connection is agreed.

S503: The second IoT device sends a third packet to the first IoT device, and correspondingly, the first IoT device receives the third packet from the second IoT device. The third packet indicates that the establishment of the first connection is completed.

Optionally, the second IoT device is a target device of a first task request and/or a second task request.

Optionally, the first packet includes a first field, the second packet includes the first field, and the third packet includes the first field, where the first field is a first value or a second value, the first value is an identifier of the first connection, the second value is an identifier of a second connection, and the second connection indicates a scheduling manner of a task request corresponding to a service that is for temporary communication or whose service volume is greater than the first threshold. For example, the first field is a setsocketopt field, where a type (type) parameter is stored in the setsocketopt field, a value of the type parameter is a first value (01) or a second value (10), the first value indicates a scheduling manner of a task request in a concurrent connection, and the second value indicates a scheduling manner of a task request in a data connection. Optionally, the value of the type parameter may also be a third value (11), and the third value identifies a scheduling manner in another connection. This is not specifically limited in this application.

Optionally, corresponding transmission protocol stacks are deployed in the first IoT device and the second IoT device, and the first IoT device (or the second IoT device) may generate the first packet (or the second packet or the third packet) based on a protocol corresponding to the transmission protocol stack. This application provides the following three protocols.

First protocol: is a protocol formed based on a TCP. In comparison with the TCP, the first field is added to a packet in the first protocol provided in this application.

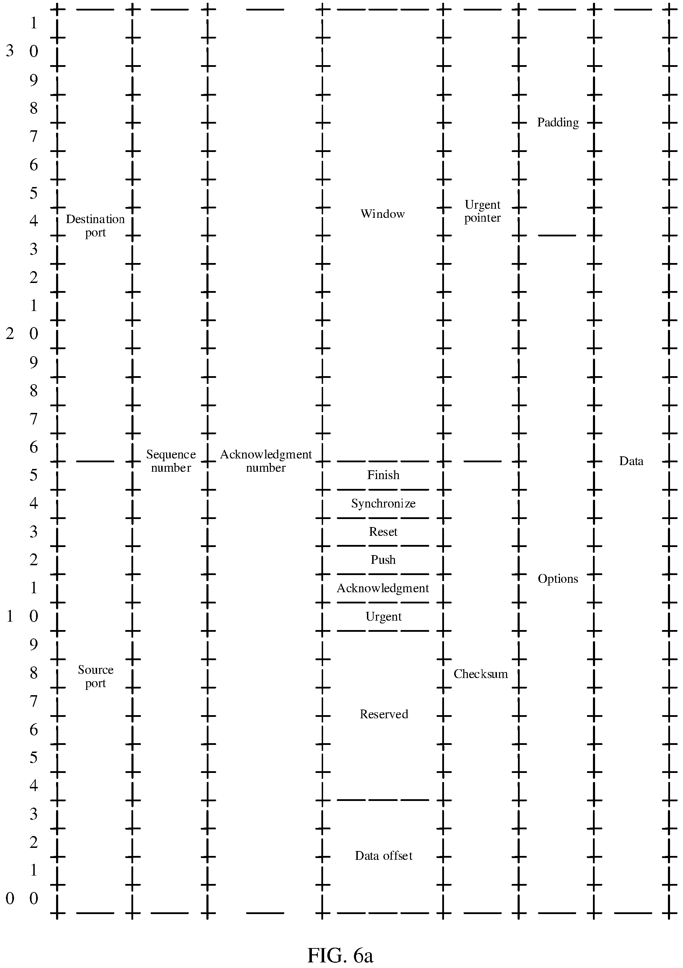

As shown in FIG. 6a, the packet generated based on the first protocol includes a source port (source port) field, a destination port (destination port) field, a sequence number (sequence number) field, an acknowledgment number (acknowledgment number) field, a data offset (data offset) field, a reserved (reserved) field, an urgent (urgent, URG) field, an acknowledgment (acknowledgment, ACK) field, a push (push, PSH) field, a reset (reset, RST) field, a synchronize (synchronous, SYN) field, a finish (finish, FIN) field, a window (window) field, a checksum (checksum) field, an urgent pointer (urgent pointer) field, an options (options) field, a padding (padding) field, and a data (data) field. In the first protocol, a field of a length of two bits (for example, two leftmost bits) that are selected from the reserved field may be used as the first field.

Second protocol: is a protocol formed based on a user datagram protocol (user datagram protocol, UDP). In comparison with the UDP, the first field is added to a packet in the second protocol provided in this application. Refer to the forming manner of the first protocol, and details are not described here.

Third protocol: is a protocol formed in this application, and is referred to as an ATP for short.

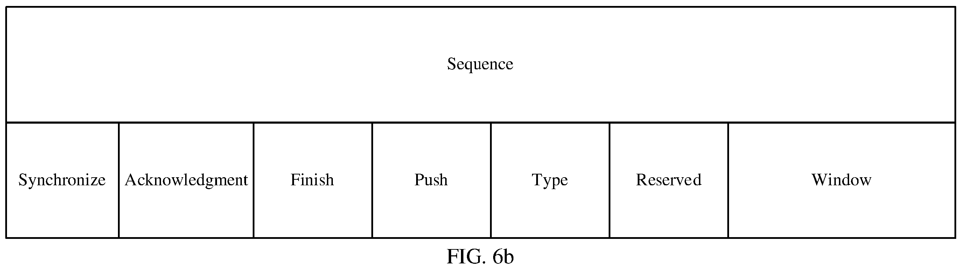

As shown in FIG. 6b, a packet generated based on the third protocol includes a sequence (sequence) field, a synchronize (synchronous, SYN) field, an acknowledgment (acknowledgment, ACK) field, a finish (finish, FIN) field, a push (push, PSH) field, a type (type) field, a reserved (reserved, Rsv) field, and a window (window, Win) field. A value of the type field (that is, the foregoing first field) is 01, 10, or 11.

In this way, based on the method shown in step S501 to step S503, a specific connection relationship (for example, the concurrent connection) is established between the IoT device initiating the task request and the target device of the task request, to determine, in the connection relationship, the scheduling manner of the service that requires long-term communication and whose service volume is less than the first threshold, so that resource overheads can be reduced. In addition, a specific connection relationship (for example, the data connection) is established between the IoT device initiating the task request and the target device of the task request, to determine the scheduling manner of the service that is for temporary communication, so that resource utilization can be improved.

Based on the foregoing design, embodiments of this application provide two handshake examples.

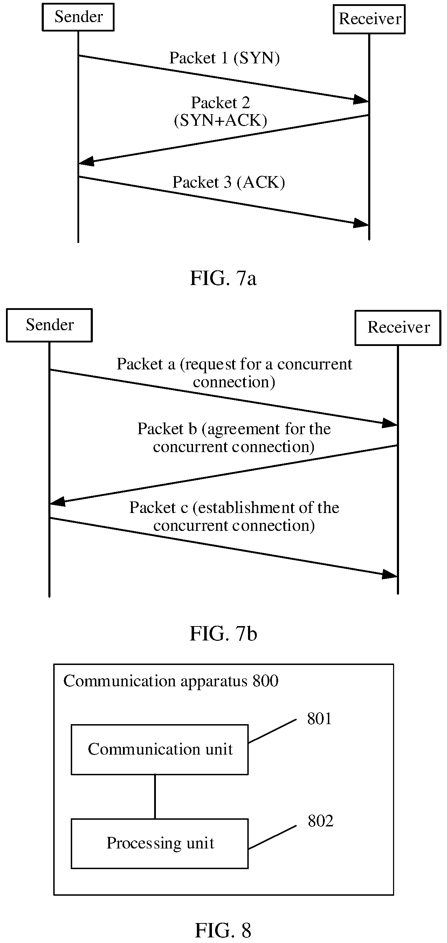

Example 1: Handshake based on the first protocol. For example, in this embodiment of this application, the first IoT device is a sender (or referred to as a server), and the second IoT device is a receiver (or referred to as a client). For another example, in this embodiment of this application, the first IoT device is a receiver (or referred to as a client), and the second IoT device is a sender (or referred to as a server). As shown in FIG. 7a, a procedure of establishing a connection through handshake between the sender and the receiver includes the following steps.

First handshake: The sender sends a packet 1 (for example, the first packet) to the receiver, where the packet 1 includes a SYN field and a sequence field, and the packet 1 further includes a field identifying a concurrent connection.

Second handshake: The receiver determines, based on the packet 1, that the sender requests to establish the concurrent connection, and sends a packet 2 (for example, the second packet) to the sender, where the packet 2 is used for acknowledging that a request for establishing the concurrent connection has been received, the packet 2 includes the SYN field, an ACK field, and the sequence field, and the packet 2 further includes the field identifying the concurrent connection.

Third handshake: After receiving the packet 2, the sender sends a packet 3 (for example, the third packet) to the receiver, where the packet 3 is used for acknowledging that the concurrent connection has been established, the packet 3 includes an ACK field and the sequence field, and the packet 3 further includes the field identifying the concurrent connection.

Example 2: (Universal) Handshake based on any one of the foregoing protocols. As shown in FIG. 7b, a procedure of establishing a connection through handshake between the sender and the receiver includes the following steps.

First handshake: The sender sends a packet a (for example, the first packet) to the receiver, where the packet 1 includes a field identifying a concurrent connection.

Second handshake: The receiver determines, based on the packet a, that the sender requests to establish the concurrent connection, and sends a packet b (for example, the second packet) to the sender, where the packet b is used for acknowledging that a request for establishing the concurrent connection has been received, and the packet b includes the field identifying the concurrent connection.

Third handshake: After receiving the packet b, the sender sends a packet c (for example, the third packet) to the receiver, where the packet c is used for acknowledging that the concurrent connection has been established, and the packet 3 includes the field identifying the concurrent connection.

After the three-way handshake is completed, the sender and the receiver may perform transmission of data of a service corresponding to the concurrent connection, that is, perform the actions shown in the foregoing step S201 and step S202.

After a handshake phase, the IoT device (the sender and/or the receiver) may allocate different transmission resources to the established connection. For example, the IoT device may invoke a setsocketopt() interface to set a socket parameter, so as to store correspondences between different connections and different threads.

Resource allocation mode 1: For the concurrent connection, all connections are managed by a unified thread, and a thread corresponding to a shared buffer of the concurrent connection is started to reduce buffer overheads of each connection. For example, the IoT device adds a socket corresponding to the connection (or the service) to a preset thread. Refer to the method for storing the first correspondence (and the second correspondence) in the foregoing embodiment. Details are not repeated here.

Resource allocation mode 2: For the data connection, because a large amount of data needs to be efficiently transmitted, each connection corresponds to an independent thread for processing, and an independent buffer is used. Although a large amount of memory and thread resources are occupied, transmission efficiency of the data connection can be ensured, and communication accuracy can be improved.

The foregoing describes the methods provided in embodiments of this application with reference to the accompanying drawings. The following describes communication apparatuses provided in embodiments of this application with reference to the accompanying drawings.

Based on a same technical concept, this application further provides a communication apparatus. The communication apparatus is configured to implement the communication method provided in the foregoing embodiments. Refer to FIG. 8. The communication apparatus 800 includes a communication unit 801 and a processing unit 802. The communication unit 801 is configured to receive and send data. The processing unit 802 is configured to implement the steps in the communication method shown in FIG. 2.

In a possible example, the processing unit 802 is configured to generate a first task request and a second task request, where the first task request indicates to process data of a first service, the second task request indicates to process data of a second service, each of the first service and the second service is a service that requires long-term communication and whose service volume is less than a first threshold, and the first service is different from the second service, and the processing unit 802 is further configured to schedule the first task request and the second task request to a first thread for processing.

In a possible design, the processing unit 802 is specifically configured to: obtain a first correspondence between the first service and the first thread and a second correspondence between the second service and the first thread; and schedule, based on the first correspondence and the second correspondence, the first task request and the second task request to the first thread for processing.

In a possible design, when the first task request is a 1^{st} task request of the first service, the processing unit 802 is further configured to store the first correspondence; and when the second task request is a 1^{st} task request of the second service, the processing unit 802 is further configured to store the second correspondence.

In a possible design, the processing unit 802 is further configured to determine a first quantity of to-be-scheduled task requests, where the to-be-scheduled task requests include the first task request and the second task request; and the processing unit 802 is further configured to determine that the first quantity is less than or equal to a concurrency quantity, where the concurrency quantity is determined based on a second quantity of task requests currently being processed and a concurrency threshold.

In a possible design, the communication unit 801 is further configured to receive a first packet from a second IoT device, where the first packet indicates to establish a first connection between the first IoT device and the second IoT device, and the first connection indicates a scheduling manner of a task request corresponding to a service that requires long-term communication and whose service volume is less than the first threshold; the communication unit 801 is further configured to send a second packet to the second IoT device based on the first packet, where the second packet indicates that establishment of the first connection is agreed; and the communication unit 801 is further configured to receive a third packet from the second IoT device, where the third packet indicates that the establishment of the first connection is completed.

In a possible design, the first packet includes a first field, the second packet includes the first field, and the third packet includes the first field, where the first field is a first value or a second value, the first value is an identifier of the first connection, the second value is an identifier of a second connection, and the second connection indicates a scheduling manner of a task request corresponding to a service that is for temporary communication or whose service volume is greater than the first threshold.

In a possible design, the first thread is used to manage a to-be-processed task request, and the processing unit 802 is further configured to schedule the first task request and the second task request to a second thread for processing, where the second thread is used to store data corresponding to the to-be-processed task request.

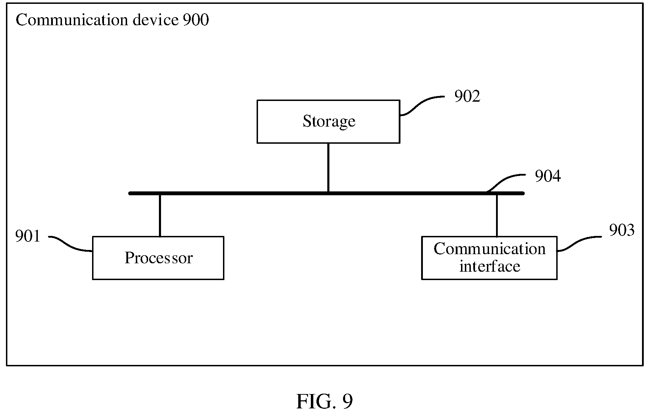

Based on a same technical concept, an embodiment of this application further provides another communication device. The communication device 900 may implement the communication method provided in the foregoing embodiments, and has a function of the communication apparatus 800 provided in the foregoing embodiments. As shown in FIG. 9, the communication device 900 includes a storage 902 and a processor 901. Optionally, the communication device 900 further includes a communication interface 903. The communication interface 903, the processor 901, and the storage 902 are connected to each other.

Optionally, the communication interface 903, the processor 901, and the storage 902 are connected to each other through a bus 904. The bus 904 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 9, but this does not mean that there is only one bus or only one type of bus.

The communication interface 903 is configured to receive and send a signal, to implement communication with a device other than the communication device.

For a function of the processor 901, refer to the descriptions in the foregoing embodiments. Details are not repeated here. The processor 901 may be a central processing unit (central processing unit, CPU), a network processor (network processor, NP), a combination of a CPU and an NP, or the like. The processor 901 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL), or any combination thereof. The processor 901 may implement the foregoing functions by using hardware or certainly by using hardware executing corresponding software.

The storage 902 is configured to store program instructions and the like. Specifically, the program instructions may include program code, and the program code includes computer operation instructions. The storage 902 may include a random access memory (random access memory, RAM), and may further include a non-volatile memory (non-volatile memory), for example, at least one magnetic disk storage. The processor 901 executes the program instructions stored in the storage 902, to implement the foregoing functions, so as to implement the method provided in the foregoing embodiments. For example, the storage 902 may include the network device or the terminal device shown in embodiments of this application.

Based on a same technical concept, an embodiment of this application further provides a computer program. When the computer program is run on a computer, the computer is caused to perform the method provided in the foregoing embodiments.

Based on a same technical concept, an embodiment of this application further provides a computer-readable storage medium. The computer-readable storage medium stores a computer program. When the computer program is run on a computer, the computer is caused to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of instructions or a data structure and can be accessed by a computer.

Based on a same technical concept, an embodiment of this application further provides a chip. The chip is configured to read a computer program stored in a storage, to implement the method provided in the foregoing embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk storage, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, applied to a first IoT device, wherein the method comprises:
generating a first task request and a second task request, wherein the first task request indicates to process data of a first service, the second task request indicates to process data of a second service, each of the first service and the second service is a service that requires long-term communication and whose service volume is less than a first threshold, and the first service is different from the second service; and
scheduling the first task request and the second task request to a first thread for processing.

2. The method according to claim 1, wherein the scheduling the first task request and the second task request to the first thread for processing comprises:
obtaining a first correspondence between the first service and the first thread and a second correspondence between the second service and the first thread; and
scheduling, based on the first correspondence and the second correspondence, the first task request and the second task request to the first thread for processing.

3. The method according to claim 2, wherein the method further comprises:
when the first task request is a 1^{st} task request of the first service, storing the first correspondence; and
when the second task request is a 1^{st} task request of the second service, storing the second correspondence.

4. The method according to any one of claims 1 to 3, wherein before the scheduling the first task request and the second task request to the first thread for processing, the method further comprises:
determining a first quantity of to-be-scheduled task requests, wherein the to-be-scheduled task requests comprise the first task request and the second task request; and
determining that the first quantity is less than or equal to a concurrency quantity, wherein the concurrency quantity is determined based on a second quantity of task requests currently being processed and a concurrency threshold.

5. The method according to any one of claims 1 to 4, wherein the method further comprises:
receiving a first packet from a second IoT device, wherein the first packet indicates to establish a first connection between the first IoT device and the second IoT device, and the first connection indicates a scheduling manner of a task request corresponding to a service that requires long-term communication and whose service volume is less than the first threshold;
sending a second packet to the second IoT device based on the first packet, wherein the second packet indicates that establishment of the first connection is agreed; and
receiving a third packet from the second IoT device, wherein the third packet indicates that the establishment of the first connection is completed.

6. The method according to claim 5, wherein the first packet comprises a first field, the second packet comprises the first field, and the third packet comprises the first field, wherein
the first field is a first value or a second value, the first value is an identifier of the first connection, the second value is an identifier of a second connection, and the second connection indicates a scheduling manner of a task request corresponding to a service that is for temporary communication or whose service volume is greater than the first threshold.

7. The method according to any one of claims 1 to 6, wherein the first thread is used to manage a to-be-processed task request, and the method further comprises:
scheduling the first task request and the second task request to a second thread for processing, wherein the second thread is used to store data corresponding to the to-be-processed task request.

8. A communication apparatus, comprising a communication unit and a processing unit, wherein
the communication unit is configured to receive and send data; and
the processing unit is configured to generate a first task request and a second task request, wherein the first task request indicates to process data of a first service, the second task request indicates to process data of a second service, each of the first service and the second service is a service that requires long-term communication and whose service volume is less than a first threshold, and the first service is different from the second service, wherein
the processing unit is further configured to schedule the first task request and the second task request to a first thread for processing.

9. The apparatus according to claim 8, wherein the processing unit is specifically configured to:
obtain a first correspondence between the first service and the first thread and a second correspondence between the second service and the first thread; and
schedule, based on the first correspondence and the second correspondence, the first task request and the second task request to the first thread for processing.

10. The apparatus according to claim 9, wherein the processing unit is further configured to:
when the first task request is a 1^{st} task request of the first service, store the first correspondence; and
when the second task request is a 1^{st} task request of the second service, store the second correspondence.

11. The apparatus according to any one of claims 8 to 10, wherein the processing unit is further configured to:
determine a first quantity of to-be-scheduled task requests, wherein the to-be-scheduled task requests comprise the first task request and the second task request; and
determine that the first quantity is less than or equal to a concurrency quantity, wherein the concurrency quantity is determined based on a second quantity of task requests currently being processed and a concurrency threshold.

12. The apparatus according to any one of claims 8 to 11, wherein the communication unit is further configured to:
receive a first packet from a second IoT device, wherein the first packet indicates to establish a first connection between the first IoT device and the second IoT device, and the first connection indicates a scheduling manner of a task request corresponding to a service that requires long-term communication and whose service volume is less than the first threshold;
send a second packet to the second IoT device based on the first packet, wherein the second packet indicates that establishment of the first connection is agreed; and
receive a third packet from the second IoT device, wherein the third packet indicates that the establishment of the first connection is completed.

13. The apparatus according to claim 12, wherein the first packet comprises a first field, the second packet comprises the first field, and the third packet comprises the first field, wherein
the first field is a first value or a second value, the first value is an identifier of the first connection, the second value is an identifier of a second connection, and the second connection indicates a scheduling manner of a task request corresponding to a service that is for temporary communication or whose service volume is greater than the first threshold.

14. The apparatus according to any one of claims 8 to 13, wherein the first thread is used to manage a to-be-processed task request, and the apparatus further comprises:
scheduling the first task request and the second task request to a second thread for processing, wherein the second thread is used to store data corresponding to the to-be-processed task request.

15. A communication apparatus, wherein the apparatus comprises a communication unit and a processing unit, wherein
the communication unit is configured to receive and send data; and
the processing unit is configured to implement the method according to any one of claims 1 to 7.

16. A communication device, comprising at least one processor and a storage, wherein
the at least one processor is coupled to the storage, and the at least one processor is configured to read a computer program stored in the storage, to perform the method according to any one of claims 1 to 7.

17. A computer-readable storage medium, wherein the computer-readable storage medium stores computer-executable instructions, and when the computer-executable instructions are invoked by a computer, the computer is caused to perform the method according to any one of claims 1 to 7.

18. A computer program product, wherein the computer program product stores computer-executable instructions, and when the computer-executable instructions are invoked by a computer, the computer is caused to perform the method according to any one of claims 1 to 7.

19. A chip system, comprising a communication interface and a processor, wherein
the communication interface is configured to input and/or output signaling or data; and
the processor is configured to execute a computer-executable program, to cause a device on which the chip system is installed to perform the method according to any one of claims 1 to 7.
